# EUROPÄISCHE PATENTSCHRIFT

(11) **EP 0 709 815 B1**
(45) Veröffentlichungstag und Bekanntmachung des Hinweises auf die Patenterteilung: **15.04.1998**
(21) Anmeldenummer: 95115920.1
(22) Anmeldetag: 10.10.1995
(51) Int. Cl.: G09B 9/05

(54) **Bilddarstellungsvorrichtung für Fahrzeugsimulator**
Display device for a vehicle simulator
Dispositif de visualisation pour simulateur de véhicule

(30) Priorität: 27.10.1994 DE 4438411
(43) Veröffentlichungstag der Anmeldung: 01.05.1996
(73) Patentinhaber: STN ATLAS Elektronik GmbH, D-28305 Bremen (DE)
(72) Erfinder: Bock, Bernhard, Dr., D-28832 Achim (DE); Pesch, Gary, Dipl.-Ing., D-27308 Kirchlinteln (DE)

(56) Entgegenhaltungen:
- EP-A- 0 564 368
- WO-A-92/09949
- DE-A- 3 925 427
- DE-A- 4 207 284
- US-A- 4 807 202
- US-A- 4 846 686
- SOVIET PATENTS ABSTRACTS Section PQ, Week 9010, 18. April 1990 Derwent Publications Ltd., London, GB; Class P85, AN 90074149 & SU-A-1 504 659 (BORISYUK) 28. Dezember 1987

## Beschreibung

Die Erfindung betrifft eine Übungseinrichtung zum Trainieren von Personen in der Führung von Fahrzeugen, insbesondere von Nutzfahrzeugen, der im Oberbegriff des Anspruchs 1 definierten Gattung.

Bei einer bekannten Übungseinrichtung dieser Art (siehe z.B. DE-A-3 925 427) ist das von der auf dem Fahrersitz plazierten Trainingsperson in Vorausrichtung durch das Frontfenster und seitwärts durch die beiden Seitenfenster der Fahrerkabine zu sehende Panorama in mehrere Sektoren aufgeteilt. Die Bildgenerierung für jeden Sektor wird in einem separaten Bildkanal des Bildgenerators durchgeführt und über eine separate Projektionseinheit auf einem Projektionsschirm dargestellt.

Zur Simulation der Rückblickspiegelsicht ist im Abstand von jedem Rückblickspiegel ein Projektionsschirm aufgestellt, auf dem mittels einer separaten Projektionseinheit ein dem jeweils dargestellten Panorama des Umgebungsszenariums entsprechender Ausschnitt abgebildet wird, wie er der Sicht des Fahrers, also der zu trainierenden Person, über den Rückblickspiegel entspricht. Da im linken und rechten Rückblickspiegel unterschiedliche Ausschnitte aus dem Umgebungsszenarium dargestellt werden müssen, ist jede Projektionseinheit an einen Bildgenerierungskanal des Bildgenerators zur synthetischen Generierung des jeweiligen Ausschnittes angeschlossen. Die Kosten für einen Bildgenerator vervielfachen sich aber mit der Anzahl der insgesamt zur Außensichtsimulation erforderlichen Bildgenerierungskanäle, so daß die zusätzliche Darstellung der Rückblickspiegelsicht zu der bereits mehrere Bildkanäle erfordernden Darstellung des Panoramas zu einer wesentlichen Verteuerung des Bildgenerators führt.

Bei einer bekannten Vorrichtung zur Simulation des freien Ausblicks in eine Landschaft mittels eines Doppelfernrohrs (DE 32 04 135 A1) wird die Blickrichtung des Doppelfernrohrs durch einen Blickrichtungsdetektor ermittelt und einem Prozeßrechner mitgeteilt. Dieser wählt einen der Blickrichtung entsprechenden Bildausschnitt eines gespeicherten Panoramas aus, der nach Digital-Video-Umsetzung in einem vor dem Doppelfernrohr angeordneten TV-Monitor dargestellt wird. Der Blickrichtungsdetektor besteht aus zwei Sendern, die am Helm eines das Doppelfernrohr am Auge haltenden Beobachters befestigt sind, und aus einer ortsfesten Empfangseinrichtung, die die Signale der beiden Sender empfängt und daraus die Blickrichtung des Doppelfernrohrs bestimmt.

Der Erfindung liegt die Aufgabe zugrunde, eine Übungseinrichtung der eingangs genannten Art zum Trainieren von Personen in der Führung von Fahrzeugen durch Beschränkung der Zahl der erforderlichen Bildgenerierungskanäle im Bildgenerator für die Außensichtsimulation wesentlich kostengünstiger zu machen.

Die Aufgabe ist bei einer Übungseinrichtung der im Oberbegriff des Anspruchs 1 angegebenen Gattung erfindungsgemäß durch die Merkmale im Kennzeichenteil des Anspruchs 1 gelöst.

Bei der erfindungsgemäßen Übungseinrichtung wird für die Simulation der Rückblickspiegelsicht nur ein einziger Bildgenerierungskanal verwendet, der wahlweise den für den linken und für den rechten Rückblickspiegel erforderlichen Ausschnitt aus dem momentan dargestellten Panorama des Umgebungsszenariums generiert und an beide Bilddarstellungseinheiten für die Rückblickspiegelsicht angeschlossen ist. Unter Bilddarstellungseinheiten werden hier alle Vorrichtungen zur Wiedergabe synthetischer Bilder verstanden, wie als Aufrecht- oder Rücklichtprojektoren ausgebildete Bildprojektoren, Monitore oder aus Monitoren zusammengesetze Bildwände. Die Bestimmung des jeweils zu generierenden Ausschnitts erfolgt durch ein Steuersignal, das aus der Kopfhaltung der Trainingsperson abgeleitet wird, die sich je nach Blickrichtung auf den linken oder rechten Rückblickspiegel ändert. Auf diese Weise wird für die beiden Rückblickspiegel immer der identische Ausschnitt generiert, der jedoch nur für eine Rückblickspiegelsicht richtig ist. Da die Trainingsperson aber immer nur einen Rückblickspiegel - und nicht gleichzeitig beide Rückblickspiegel - sehen kann und mit der notwendigerweise durchzuführenden Kopfdrehung zur Betrachtung des einen oder anderen Rückblickspiegels die Umschaltung in der Ausschnittgenerierung vorgenommen wird, sieht die auf dem Fahrersitz plazierte Trainingsperson im jeweiligen Rückblickspiegel immer den zutreffenden Ausschnitt der Rückwärtssicht im Umgebungsszenarium. Durch die dadurch mögliche Einsparung eines Bildgenerierungskanals können die Herstellungskosten für die Übungseinrichtung wesentlich gesenkt werden.

Zweckmäßige Ausführungsformen der erfindungsgemäßen Übungseinrichtung mit vorteilhaften Weiterbildungen und Ausgestaltungen der Erfindung ergeben sich aus den weiteren Ansprüchen.

Die Erfindung ist anhand eines in der Zeichnung dargestellten Ausführungsbeispiels im folgenden näher beschrieben. Es zeigen:
- Fig. 1: eine perspektivische Darstellung einer Übungseinrichtung zum Trainieren von Personen in der Führung von Nutzfahrzeugen,
- Fig. 2: ein Blockschaltbild einer Vorrichtung zur Außensichtsimulation in der Übungseinrichtung in Fig. 1.

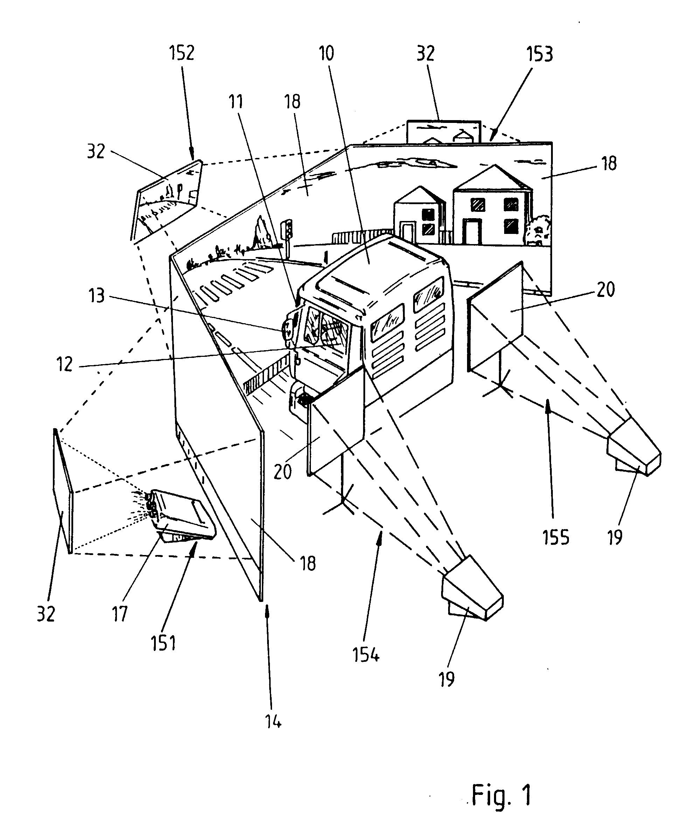

Die in Fig. 1 in perspektivischer Ansicht dargestellte Übungseinrichtung zum Trainieren von Personen in der Führung von Nutzfahrzeugen, wie Lastkraftwagen mit oder ohne Hänger, Sattelschlepper od. dgl., weist eine Fahrerkabine 10 auf, die der Fahrerkabine des gewünschten Nutzfahrzeugs identisch nachgebildet ist und Fahrersitz, Beifahrersitz sowie sämtliche Bedienelemente für den Fahrbetrieb, wie Lenkrad, Schalthebel, Fuß-, Gas-, Brems- und Kupplungspedal etc. enthält. Wie üblich, weist die Fahrerkabine 10 ein Frontfenster 11 und zwei Seitenfenster 12 auf, von denen hier nur das linke Seitenfenster 12 auf der Fahrerseite zu sehen ist. Die Fahrerkabine 10 trägt außen zwei in Fahrtrichtung links und rechts angeordnete Rückblickspiegel 13, von denen in Fig. 1 wiederum nur der linke, auf der Fahrerseite angeordnete Rückblickspiegel 13 zu sehen ist.

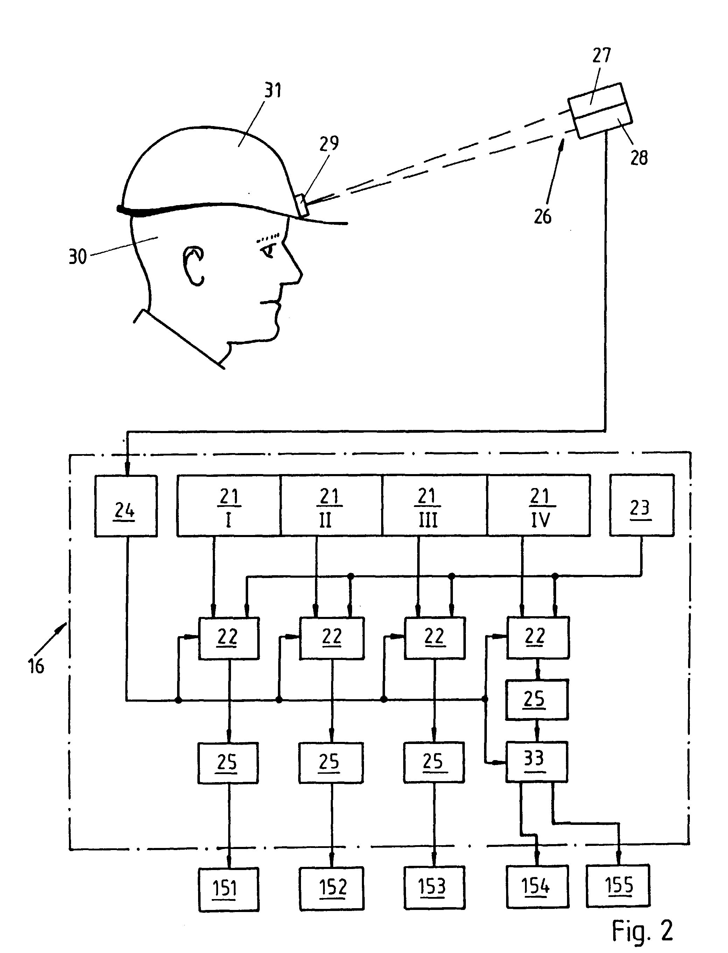

Die Übungseinrichtung weist ferner eine Vorrichtung zur Außensichtsimulation 14 auf, die dem Fahrer ein seiner Sicht aus der Fahrerkabine 10 entsprechendes Panorama eines fortlaufend aktualisierten, synthetisch generierten Umgebungsszenariums sowie seiner Sicht in die Rückblickspiegel entsprechende Ausschnitte des gleichen Umgebungsszenariums seitlich hinter der Fahrerkabine 10 darstellt. Hierzu sind insgesamt fünf Projektionseinheiten 151 bis 155 vorgesehen, die von einem vierkanaligen Bildgenerator 16 (Fig. 2) angesteuert werden. Mittels der drei Projektionseinheiten 151 bis 153 wird ein über 180° sich erstreckendes Panorama eines Umgebungsszenariums dargestellt, welches die auf dem Fahrersitz plazierte, zu trainierende Person, im folgenden kurz Fahrer genannt, durch Front- und Seitenfenster 11, 12 sehen kann. Diese drei Projektionseinheiten 151, 152 und 153 sind identisch ausgebildet und umfassen jeweils einen Großbildprojektor 17 sowie einen transparenten Großbildschirm 18, auf dessen Rückseite der Großbildprojektor 17 über einen Umlenkspiegel 32 einen Sektor des 180°-Panoramas projiziert. Der Großbildschirm 18 der mittleren Projektionseinheit 152 ist dabei im Abstand vor dem Frontfenster 11 und parallel zu diesem aufgestellt, während die Großbildschirme 18 der beiden Projektionseinheiten 151 und 153 seitlich im Abstand von der Fahrerkabine 10 und in einem Winkel zum Großbildschirm 18 der mittleren Projektionseinheit 152 so angeordnet sind, daß der Fahrer auch beim Blick durch die Seitenfenster 12 sich innerhalb des dargestellten Panoramas befindet.

Die beiden weiteren Projektionseinheiten 154 und 155 dienen zur Simulation der Rückblickspiegelsicht für den im 180°-Außensichtpanorma sich befindlichen Fahrer. Die beiden Projektionseinheiten 154 und 155 sind jeweils identisch aufgebaut und umfassen einen Bildprojektor 19 und einen transparenten Projektionsschirm 20, auf dessen Rückseite der Bildprojektor 19 das von ihm generierte Bild projiziert. Die Bildprojektoren 19 können aber auch vor den Projektionsschirmen 20 angeordnet werden und auf die Vorderseite des dann nicht transparenten Projektionsschirm 20 projizieren. Anstelle von Bildprojektor 19 und Projektionsschirm 20 kann auch ein handelsüblicher Monitor verwendet werden. Die beiden Projektionsschirme 20 bzw. Monitore sind in Zuordnung zu dem linken und rechten Rückblickspiegel 13 im Abstand von diesen etwa nahe der Rückseite der Fahrerkabine 10 so aufgestellt, daß das dargestellte Bild über die beiden Rückspiegel 13 vom Fahrer gesehen werden kann. Alle fünf Projektionseinheiten 151 bis 155 werden vom Bildgenerator 16 angesteuert.

Der grundsätzliche Aufbau des Bildgenerators 16 ist aus dem Blockschaltbild in Fig. 2 zu erkennen. Der Bildgenerator 16 weist vier Bildgenerierungskanäle I, II, III und IV auf, die jeweils einen Einzelbildspeicher 21 und eine Bildsyntheseeinrichtung 22 aufweisen. In den Bildspeichern 21 der Bildgenerierungskanäle I, II und III sind jeweils Sektoren des 180°-Panoramas des Umgebungsszenariums abgespeichert, während in dem Bildspeicher 21 des Bildgenerierungskanals IV die der Sicht in den linken und rechten Rückblickspiegel entsprechenden Ausschnitte des Umgebungsszenariums seitlich hinter der Fahrerkabine 10 abgespeichert sind. In einem Objektspeicher 23 sind eine Vielzahl von Objekten, wie Häuser, Ampeln etc., abgespeichert. Die Sektoren des 180°-Panoramas und die Objekte werden unter Steuerung durch einen Prozeßrechner 24, der die Objekte koordinatenmäßig den Sektoren des 180°-Panoramas zuordnet, in den Bildsyntheseeinrichtungen 22 miteinander verknüpft. In den jedem Bildgenerierungskanal I bis III zugeordneten Wandlern 25 findet eine Digital-Video-Umsetzung statt. Die Videosignale werden den Projektionseinheiten 151 bis 153 zugeführt. Für den Bildgenerierungskanal IV bestimmt der Prozeßrechner 24 in Abhängigkeit von einem ihm zugeführten Steuersignal darüber hinaus, ob über die Bildsyntheseeinrichtung 22 der Ausschnitt für den linken oder rechten Rückblickspiegel 13, also für den fahrer- oder beifahrerseitigen Rückblickspiegel 13, generiert wird, der nach Digital-Video-Umsetzung im Wandler 25 über einen Video-Umschalter 33 wechselweise den beiden Projektionseinheiten 154 und 155 zugeführt wird. Dieses Steuersignal wird von einem Blickrichtungsdetektor 26 generiert, und zwar in Abhängigkeit davon, ob der Fahrer in den linken oder in den rechten Rückblickspiegel 13 blickt. Dieses Steuersignal steuert gleichzeitig den Video-Umschalter 33, so daß zuodnungsrichtig der zutreffende Bildausschnitt in dem richtigen Rückblickspiegel 13 erscheint. Der Video-Umschalter 33, dessen Eingang an dem Bildgenerierungskanal IV, dessen beide Ausgänge jeweils an einer Projektionseinheit 154, 155 und dessen Steuereingang an dem Prozeßrechner 24 angeschlossen ist, ist so ausgebildet, daß seine beiden Ausgänge fortlaufend und gleichzeitig mit Bildsynchronisationssignalen belegt werden, die Bildsignale hingegen entsprechend dem Steuersignal an dem Steuereingang aber nur an den einen oder anderen Ausgang gelangen. Alternativ können aber auch die Bildsignale gleichzeitig den Ausgängen zugeführt und ein Ausgang in Abhängigkeit vom Steuersignal dunkelgetastet werden.

Wie in Fig. 2 schematisch dargestellt ist, umfaßt der Blickrichtungsdetektor 26 einen Infrarotsender 27, einen Infrarotempfänger 28 und einen Reflektor 29, der am Kopf 30 des Fahrers angeordnet ist. In Fig. 2 ist der Reflektor 29 an der Stirnseite einer Mütze 31 befestigt, die der Fahrer beim Training zu tragen hat. Der Reflektor 29 kann aber auch in anderer Weise am Kopf 30 des Fahrers befestigt werden, z. B. an einem Stirnband oder an einer Haarspange.

Infrarotsender 27 und Infrarotempfänger 28 bilden eine Baueinheit und sind in der Fahrerkabine 10 angeordnet, vorzugsweise im Winkel zwischen dem Frontfenster 11 und dem Seitenfenster 12 auf der Beifahrerseite nahe dem Dachhimmel der Fahrerkabine 10. Die Anordnung und Ausrichtung von Infrarotsender 27 und Infrarotempfänger 28 in bezug auf den auf dem Fahrersitz plazierten Fahrer ist räumlich so vorgenommen, daß ein vom Infrarotsender 27 kontinuierlich ausgesendeter IR-Lichtstrahl dann vom Reflektor 29 an der Mütze 31 des Fahrers hin zum Infrarotempfänger 28 reflektiert wird, wenn der Fahrer eine solche Kopfdrehung vorgenommen hat, die notwendig ist, um in den Rückblickspiegel 13 auf der Beifahrerseite zu sehen. Bei allen anderen Kopfhaltungen trifft der vom Infrarotsender 27 ausgesandte Lichtstrahl entweder nicht den Reflektor 29 oder wird von diesem nicht zum Infrarotempfänger 28 hin reflektiert. Solange der Infrarotempfänger 28 Licht empfängt, generiert er ein Steuersignal, das dem Prozeßrechner 24 zugeführt wird, der seinerseits so lange die Bildsyntheseeinrichtung 22 im Bildgenerierungskanal IV veranlaßt, einen Ausschnitt des Umgebungsszenariums zu generieren, wie er im Rückblickspiegel 13 auf der Beifahrerseite vom Fahrer aus zu sehen ist. Dieser Ausschnitt wird nach Digital-Video-Umsetzung in dem Wandler 25 des vierten Bildgenerierungskanals IV über den Video-Umschalter 33 dem Bildprojektor 19 für die Projektionseinheit 155 zugeführt, der den Ausschnitt auf den Projektionsschirm 20 der Projektionseinheit 155 projiziert. Damit wird im Rückblickspiegel 13 auf der Beifahrerseite, ein Ausschnitt des Umgebungsszenariums sichtbar, wie er der Fahrersicht in den Rückblickspiegel 13 auf der Beifahrerseite entspricht. Da der Fahrer bei dieser Kopfhaltung nicht in den Rückblickspiegel 13 auf der Fahrerseite einblicken kann, merkt er nicht, daß dort kein Spiegelbild vorhanden ist.

Sobald der Infrarotempfänger 28 kein Licht empfängt, wird von diesem kein Signal an den Prozeßrechner 24 gegeben. Der Prozeßrechner 24 veranlaßt damit die Bildsyntheseeinrichtung 22 im Bildgenerierungskanal IV, einen Ausschnitt des Umgebungsszenariums zu generieren, wie er der Sicht des Fahrers in den Rückblickspiegel 13 auf der Fahrerseite entspricht. Da gleichzeitig der Video-Umschalter 33 umgesteuert wird, wird nunmehr dieser Ausschnitt über die Projektionseinheit 154 dargestellt, und in dem Rückblickspiegel 13 auf der Fahrerseite ist dieser Ausschnitt zu sehen. Da der Fahrer aber nicht ohne Kopfdrehung in den Rückblickspiegel 13 auf der Beifahrerseite einblicken kann und diese Kopfdrehung wieder eine Umschaltung der Ausschnittgenerierung im Bildgenerierungskanal IV und des Video-Umschalters 33 zur Folge hätte, stört nicht, daß im Rückblickspiegel 13 auf der Beifahrerseite keine Spiegelbilddarstellung erfolgt.

Die Erfindung ist nicht auf das beschriebene Ausführungsbeispiel beschränkt. So kann die wechselweise Bildgenerierung zur Bilddarstellung der beiden Rückblickspiegelsichten und deren Auswahl und Umschaltung durch die Kopfdrehung des Fahrers nicht nur in Übungseinrichtungen für Nutzfahrzeuge verwendet werden, sondern in allen Fahrzeugen, die notwendigerweise mit Rückblickspiegeln ausgerüstet sind. Beispiele hierfür sind Personenkraftwagen, Schienenfahrzeuge, wie Straßenbahnen, und kleinere Motorschiffe, wie Barkassen für den Personenverkehr, u. dgl.

Des weiteren muß der Blickrichtungsdetektor 26 nicht auf Infrarotbasis arbeiten. Er kann ebenso auf elektromagnetischer oder Ultraschallbasis arbeiten.

Selbstverständlich ist es auch möglich, den Infrarotsender 27 so anzuordnen, daß der vom Reflektor 29 kein Licht empfängt, wenn der Fahrer in den Rückblickspiegel 13 für die Beifahrerseite blickt, und umgekehrt Licht empfängt, wenn der Fahrer in den Rückblickspiegel 13 auf der Fahrerseite blickt. Dann wäre die Ansteuerung des Bildgenerierungskanals IV und des Video-Umschalters 33 entsprechend zu ändern, damit die vorstehend beschriebenen Vorgänge der Bilddarstellung in den beiden Rückblickspiegeln 13 mit richtiger Bildzuordnung in gleicher Weise ablaufen.

Weiterhin kann der Video-Umschalter 33 entfallen und der jeweils generierte Bildinhalt beiden Projektionseinheiten 154, 155, gleichzeitig zugeführt werden. Durch Dunkeltasten der jeweils falschen Projektionseinheit 154, 155 ließe es sich vermeiden, daß eine falsche Spiegelsicht auf dem jeweils vom Fahrer momentan nicht einzusehenden Rückblickspiegel 13 erscheint, was im übrigen auch nicht stören würde, da dieser Rückblickspiegel 13 mit einer falschen Sicht vom Fahrer nicht gesehen werden kann.

## Patentansprüche

1. Übungseinrichtung zum Trainieren von Personen in der Führung von Fahrzeugen, insbesondere von Nutzfahrzeugen, mit einer Fahrersitz und Bedienelemente für den Fahrbetrieb, wie Lenkrad, Schalthebel, Fuß-, Gas-, Brems- und Kupplungspedal enthaltenden Fahrerkabine (10), die Front- und Seitenfenster (11, 12) aufweist und zwei in Fahrtrichtung links und rechts angeordnete Rückblickspiegel (13) trägt, und mit einer Vorrichtung zur Außensichtsimulation (14), die mittels von einem mehrkanaligen Bildgenerator (16) angesteuerter Bilddarstellungseinheiten (15) der Trainingsperson ein ihrer Sicht aus der Fahrerkabine (10) entsprechendes Panorama eines fortlaufend aktualisierten, synthetisch generierten Umgebungsszenariums sowie ihrer Sicht in die Rückblickspiegel (13) entsprechende Ausschnitte des gleichen Umgebungsszenariums darstellt, dadurch gekennzeichnet, daß die beiden Bilddarstellungseinheiten (154, 155) für die Rückblickspiegelsicht an einem Bildgenerierungskanal (IV) des Bildgenerators (16) angeschlossen sind, daß der Bildgenerierungskanal (IV) so ausgebildet ist, daß er in Abhängigkeit von einem Steuersignal den der Sicht in den linken oder rechten Rückblickspiegel (13) entsprechenden Ausschnitt des Umgebungsszenariums generiert, und daß ein Blickrichtungsdetektor (26) vorgesehen ist, der die Kopfhaltung der Trainingsperson beim Blick in den linken oder rechten Rückblickspiegel (13) sensiert und daraus das Steuersignal ableitet.

2. Einrichtung nach Anspruch 1, dadurch gekennzeichnet, daß der Bildgenerierungskanal (IV) für die Dauer des Auftretens des Steuersignals den der Sicht in den Rückblickspiegel (13) auf der Beifahrerseite entsprechenden Ausschnitt und bei Wegfall des Steuersignals den der Sicht in den Rückblickspiegel (13) auf der Fahrerseite entsprechenden Ausschnitt des Umgebungsszenariums generiert oder umgekehrt und daß der Blickrichtungsdetektor (26) die Kopfstellung der Trainingsperson beim Blick in den auf der Beifahrerseite angeordneten Rückblickspiegel (13) oder in den auf der Fahrerseite angeordneten Rückblickspiegel (13) sensiert und für die Dauer dieser Kopfstellung das Steuersignal an den Bildgenerierungskanal (IV) legt.

3. Einrichtung nach Anspruch 2, dadurch gekennzeichnet, daß der Blickrichtungsdetektor (26) einen in der Fahrerkabine (10) angeordneten Sender (27) und Empfänger (28) und einen am Kopf (30) der Trainingsperson anzuordnenden Reflektor (29) aufweist und daß Sender (27) und Empfänger (28) in der Fahrerkabine (10) in bezug auf die auf dem Fahrersitz plazierte Trainingsperson räumlich so angeordnet sind, daß ein vom Sender (27) fortlaufend ausgesendetes Sendesignal bei einer für den Blick zum Beifahrer-Rückblickspiegel (13) bzw. zum Fahrer-Rückblickspiegel ausgerichteten Kopfhaltung der Trainingsperson vom Reflektor (29) zum Empfänger (28) hin reflektiert wird.

4. Einrichtung nach Anspruch 3, dadurch gekennzeichnet, daß der Reflektor (29) an einer von der Trainingsperson aufzusetzenden Kopfbedeckung (31) angeordnet ist.

5. Einrichtung nach Anspruch 2 und 3 oder 4, dadurch gekennzeichnet, daß Sender (27) und Empfänger (29) im Winkel zwischen Front- und Beifahrer-Seitenfenster bzw. Fahrer-Seitenfenster (11, 12) nahe dem Dachhimmel der Fahrerkabine (10) angeordnet sind.

6. Einrichtung nach einem der Ansprüche 3 bis 5, dadurch gekennzeichnet, daß Sender (27) und Empfänger (28) im Infrarotbereich arbeitende optische Sender und Empfänger sind.

7. Einrichtung nach einem der Ansprüche 1 bis 6, dadurch gekennzeichnet, daß zwischen dem Bildgenerierungskanal (IV) des Bildgenerators (16) und den beiden Bilddarstellungseinheiten (154, 155) ein Video-Umschalter (33) mit einem an den Bildgenerierungskanal (IV) angeschlossenen Eingang und zwei jeweils an einen der Bilddarstellungseinheiten (154, 155) angeschlossenen Ausgängen angeordnet ist, der von dem Steuersignal synchron zur Bildgenerierung im Bildgenerierungskanal (IV) umgesteuert wird.

8. Einrichtung nach Anspruch 7, dadurch gekennzeichnet, daß der Video-Umschalter (33) so ausgebildet ist, daß Bildsynchronisationssignale gleichzeitig und fortlaufend an seinen beiden Ausgängen anliegen und die Bildsignale wechselweise auf seine Ausgänge durchgeschaltet oder an den Ausgängen dunkelgetastet werden.

## Claims

1. Practice device for training persons to drive vehicles, in particular commercial vehicles, with a driver's seat and driver's cabin (10) containing operating elements for driving such as steering wheel, gear lever, foot, accelerator, brake and clutch pedals, said driver's cabin having front and side windows (11, 12) and two rear vision mirrors (13) arranged to the left and right in the direction of travel, and with a device for simulating outside vision (14), which by means of image display units (15) actuated by a multi-channel image generator (16), provides the trainee with a panorama corresponding to his/her view from the driver's cabin (10) of a continuously updated, artificially generated environment scene as well as sections of the same environment scene corresponding to his/her view in the rear vision mirror (13), characterised in that the two image display units (154, 155) for the view in the rear vision mirror are connected to an image generation channel (IV) of the image generator (16); that the image generation channel (IV) is constructed so that it generates the section of the environment scene corresponding to the view in the left or right rear vision mirror (13) in dependence on a control signal; and that a viewing direction detector (26) is provided which senses the position of the trainee's head when looking into the left or right rear vision mirror (13) and derives the control signal therefrom.

2. Device according to Claim 1, characterised in that the image generation channel (IV) generates the section corresponding to the view in the rear vision mirror (13) on the passenger's side for the period during which the control signal occurs and, when the control signal is absent, generates the section of the environment scene corresponding to the view in the rear vision mirror (13) of the driver's side, or vice versa; and that the viewing direction detector (26) senses the position of the trainee's head when looking into the rear vision mirror (13) arranged on the passenger's side or into the rear vision mirror (13) arranged on the driver's side, and for the duration of this head position, connects the control signal across the image generation channel (IV).

3. Device according to Claim 2, characterised in that the viewing direction detector (26) has a transmitter (27) receiver (28) arranged in the driver's cabin (10) and a reflector (29) to be arranged on the head (30) of the trainee; and that the transmitter (27) and receiver (28) are spatially arranged in the driver's cabin (10) in relation to the trainee seated on the driver's seat in such a way that a transmission signal continuously emitted by the transmitter (27) is reflected by the reflector (29) towards the receiver (28) when the position of the trainee's head is aligned for looking towards the passenger rear vision mirror (13) or towards the driver rear vision mirror.

4. Device according to Claim 3, characterised in that the reflector (29) is arranged on a head covering (31) to be worn by the trainee.

5. Device according to Claim 2 and 3 or 4, characterised in that the transmitter (27) and receiver (29) are arranged in the angle between the front and passenger side window or driver side window (11, 12) close to the roof of the driver's cabin (10).

6. Device according to one of Claims 3 to 5, characterised in that the transmitter (27) and receiver (28) are an optical transmitter and receiver operating in the infrared range.

7. Device according to one of Claims 1 to 6, characterised in that between the image generation channel (IV) of the image generator (16) and the two image display units (154, 155), a video changeover switch (33) is arranged which has an input connected to the image generation channel (IV) and two outputs respectively connected to one of the image display units (154, 155), and which is synchronously switched over by the control signal for image generation in the image generation channel (IV).

8. Device according to Claim 7, characterised in that the video changeover switch (33) is constructed so that image synchronisation signals are simultaneously and continuously present at its two outputs and the image signals are alternately switched through onto its outputs or blanked at the outputs.

## Revendications

1. Dispositif d'apprentissage pour former des personnes à la conduite de véhicules, notamment de véhicules utilitaires, comprenant une cabine de conduite (10) contenant un siège de conducteur et des éléments de commande pour la conduite, tels que volant de direction, levier de changement de vitesse, pédales de sélecteur, d'accélération, de frein et d'embrayage, cabine qui présente des fenêtres avant et latérales (11, 12) et qui supporte deux rétroviseurs (13) disposés à gauche et à droite dans la direction de marche, et compprenant un dispositif (14) pour la simulation de la vision extérieure qui, au moyen d'unités de représentation d'images (15) commandées par un générateur d'images (16) à plusieurs canaux, présente à la personne en formation un panorama, correspondant à sa vision à partir de la cabine de conduite (10), d'un scénario d'environnement actualisé en continu et artificiellement généré, ainsi que des détails du même scénario d'environnement qui correspondent à sa vision dans les rétroviseurs (13), **caractérisé** en ce que les deux unités de représentation d'images (154, 155) pour la vision dans les rétroviseurs sont raccordées à un canal de génération d'images (IV) du générateur d'images (16), en ce que le canal de génération d'images (IV) est conçu de telle sorte qu'il génère, en fonction d'un signal de commande, le détail du scénario d'environnement correspondant à la vision dans le rétroviseur (13) de gauche ou de droite, et en ce qu'est prévu un détecteur de direction d'observation (26) qui détecte la position de la tête de la personne en formation lorsqu'elle regarde dans le rétroviseur (13) de gauche ou de droite, et en déduit le signal de commande.

2. Dispositif selon la revendication 1, **caractérisé** en ce que le canal de génération d'images (IV) génère, pendant la durée d'apparition du signal de commande, le détail du scénario d'environnement correspondant à la vision dans le rétroviseur (13) côté passager et, en l'absence du signal de commande, le détail correspondant à la vision dans le rétroviseur (13) côté conducteur, ou vice-versa, et en ce que le détecteur de direction d'observation (26) détecte la position de la tête de la personne en formation lorsqu'elle regarde dans le rétroviseur (13) disposé côté passager ou dans le rétroviseur (13) disposé côté conducteur, et applique pendant la durée de cette position de la tête le signal de commande au canal de génération d'images (IV).

3. Dispositif selon la revendication 2, **caractérisé** en ce que le détecteur de direction d'observation (26) présente un émetteur (27) et un récepteur (28) disposés dans la cabine de conduite (10), et un réflecteur (29) à disposer sur la tête (30) de la personne en formation, et en ce que l'émetteur (27) et le récepteur (28) sont, dans la cabine de conduite (10), disposés dans l'espace, par rapport à la personne en formation placée sur le siège de conducteur, de telle sorte qu'un signal d'émission émis en continu par l'émetteur (27) est réfléchi par le réflecteur (29) sur le récepteur (28) en présence d'une position de la tête de la personne en formation orientée pour regarder dans le rétroviseur (13) côté passager ou, respectivement, dans le rétroviseur côté conducteur.

4. Dispositif selon la revendication 3, **caractérisé** en ce que le réflecteur (29) est disposé sur un couvre-chef (31) à porter par la personne en formation.

5. Dispositif selon la revendication 2 et 3 ou 4, **caractérisé** en ce que l'émetteur (27) et le récepteur (28) sont disposés dans l'angle entre la fenêtre avant (11) et la fenêtre latérale (12) côté passager ou côté conducteur, à proximité du plafond de la cabine de conduite (10).

6. Dispositif selon l'une des revendications 3 à 5, **caractérisé** en ce que les émetteurs (27) et récepteurs (28) sont des émetteurs et récepteurs optiques travaillant dans la plage infrarouge.

7. Dispositif selon l'une des revendications 1 à 6, **caractérisé** en ce qu'un commutateur vidéo (33), avec une entrée raccordée au canal de génération d'images (IV) et deux sorties respectivement raccordées à une des unités de représentation d'images (154, 155), est disposé entre le canal de génération d'images (IV) du générateur d'images (16) et les deux unités de représentation d'images (154, 155), commutateur qui est commuté par le signal de commande en synchronisme avec la génération d'images dans le canal de génération d'images (IV).

8. Dispositif selon la revendication 7, **caractérisé** en ce que le commutateur vidéo (33) est conçu de telle sorte que des signaux de synchronisation d'images sont appliqués simultanément et en continu à ses deux sorties, tandis que les signaux d'images sont alternativement connectés sur ses sorties ou bloqués aux sorties.
